(19)

Europäisches
Patentamt
European
Patent Office
Office européen
des brevets

(11) **EP 3 043 040 B1**

(12) **EUROPEAN PATENT SPECIFICATION**

(45) Date of publication and mention
of the grant of the patent:
**20.12.2017 Bulletin 2017/51**

(51) Int Cl.:
***F01N 3/20*** *(2006.01)*

(21) Application number: **15155447.4**

(22) Date of filing: **17.02.2015**

(54) **Vehicular liquid storage system, motor vehicle comprising said system and method for assessing a quality of a liquid therein**

Flüssigkeitsspeichersystem für ein Fahrzeug, Kraftfahrzeug mit einem solchen System und Verfahren zur Beurteilung der Qualität der Flüssigkeit darin

Système de stockage de liquide pour véhicule, véhicule comprenant ledit système et procédé d'évaluation de la qualité d'un liquide dans celui-ci

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2015 US 201562100307 P**

(43) Date of publication of application:
**13.07.2016 Bulletin 2016/28**

(73) Proprietor: **Inergy Automotive Systems Research (Société Anonyme)**
**1120 Brussels (BE)**

(72) Inventor: **McCleary, Scott**
**White Lake, MI Michigan 48386 (US)**

(74) Representative: **Remy, Vincent Noel Paul**
**LLR**
**11 boulevard de Sébastopol**
**75001 Paris (FR)**

(56) References cited:
**WO-A1-2014/118248      GB-A- 808 462**
**US-A1- 2003 005 751      US-A1- 2009 101 656**

**Description**

**Technical field of the invention**

The present invention relates to a vehicular liquid storage system, a motor vehicle comprising said system and a method for assessing a quality of a liquid therein.

**Background of the invention**

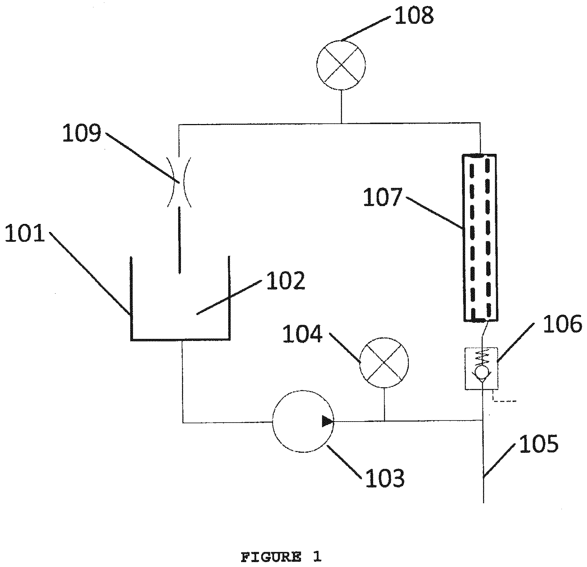

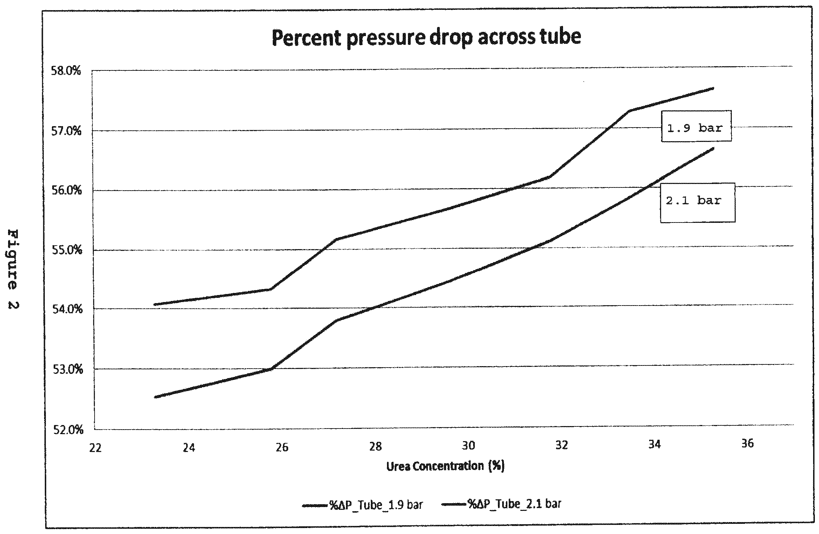

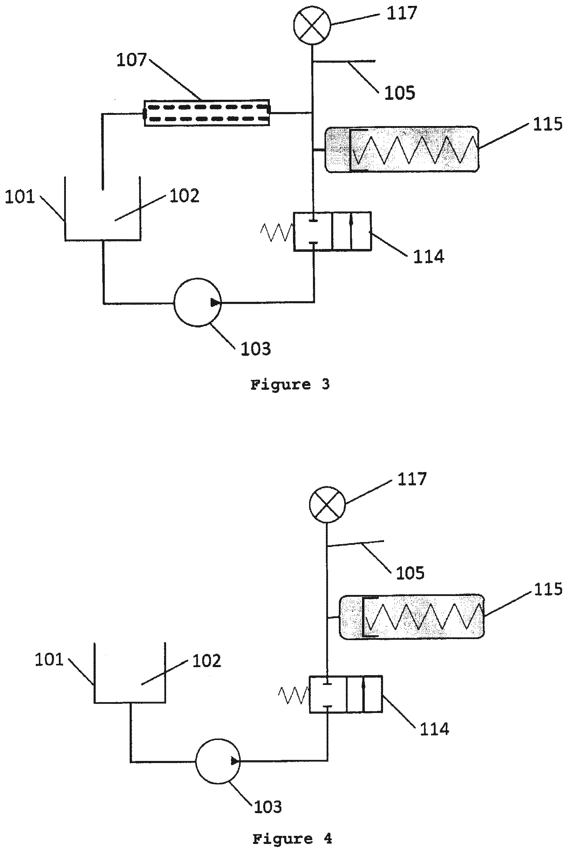

WO2014/118248A1 discloses a method for monitoring urea concentration and quality in urea solution in a tank of an SCR system.
US 2009/0101656A discloses a system for storing an additive and for injecting the additive into exhaust gases of an internal combustion engine, the system comprising: a tank for storing the additive, an injector and a pump for conveying the additive from the tank to the injector via an injection line; and a purge device configured to force a purge gas to flow through the entire injection line from the injector to the tank, the purge gas including engine exhaust gases. US 2009/0101656A also discloses a method for storing an additive and for injecting the additive into an exhaust pipe of an internal combustion engine the method comprising: conveying an additive stored in a tank to an injector using a pump and via an injection line; injecting the additive into the exhaust pipe using the injector; and sporadically purging the injection line by flow of a purge gas through the entire line from the injector to the tank, the purge gas including engine exhaust gases. Figure 1 of US 2009/0101656A shows a system comprising an additive tank (1) containing an aqueous urea solution, an injection line (2) extending from the tank (1) to an injector (3) located at the exhaust pipe (4), and a return line (5) returning the unconsumed additive to the additive tank (1). The injection line (2) comprises a pump (6), outside the tank (1) and the return line, and a pressure controller (7). This controller (7) comprises a diaphragm and a spring that keeps the diaphragm in a closed position as long as the pressure has not exceeded a certain value. This system comprises a purge device including a compressed air reserve (8) which feeds compressed air to the injector (3) via a feed line (9), thereby serving to vaporize the additive. This reserve (8) also communicates with the additive tank (1) via a purge line (10) equipped with a valve (11) that opens when a computer (not shown) initiates a purge. This line terminates downstream of the pump, on a part of the draw line (12) located inside the additive tank (1). This portion of draw line (12) is equipped with a non-return valve (13) preventing the compressed air from entering the tank (1).
WO 2007/122154A discloses a method for manufacturing a plastic fuel tank by moulding a parison in a mould, in which method the parison is locally deformed during moulding of the parison in order to obtain an impermeable hollow built-in connector provided with a screw thread, and to do so by means of a concave counter-form and a convex form that can penetrate the counter-form, these two pieces being secured, one to the mould and the other to a core located inside the mould, or vice versa, and at least one of these pieces being provided with a screw thread, the moulding of the connector taking place by the convex form penetrating the concave counter-form. Figures 1, 2, 3 and 4 of WO 2007/122154A illustrate the four successive steps in moulding a built-in connector. In Figure 1, the parison is inserted between the form (4) carried by the mould (3) and the counter-form (1) carried by the core. In Figure 2, the parison (2) has been pressed against the mould (3), and the counter-form (1) of the core matches the form (4) of the mould (3). In Figure 3, the counter-form has been unscrewed and removed from the mould at the same time as the core. Only the parison (2) remains, which is pressed against the mould (3) in the final moulding of the tank. Figure 4 shows a fraction of the demoulded tank, which includes a smooth outer wall (5) and an internal connector (6) provided with a screw thread.
Many quality sensors have been developed based for determining the concentration of urea in the urea liquid. Technologies include ultrasound which measures the acoustic properties, infrared which measures the spectral absorption of urea; heat capacitance which measures the fluids change in temperature over time while applying a known heating power input; and electrical capacitance and radio frequency which measure the electrical properties (conductivity, emissivity, dielectric...) of the fluid. For example, US 2008/0280371A discloses a method for sensing urea concentration, comprising: providing an acoustic wave device including a first interdigital transducer and a second interdigital transducer, said acoustic wave device having a gap formed between said first inter digital transducer and said second inter digital transducer, wherein an urea solution is able to contact the gap; measuring change in molecular weight of said urea solution that corresponds to a change in frequency utilizing said acoustic wave device; and determining concentration of said urea solution based upon the molecular weight of said urea solution wherein the molecular weight and the change in frequency measurement provide data indicative of the concentration of said urea solution.
There are also technologies in other industries that measure viscosity of gas or oil. Although they are not acting on the same fluid the technologies may exist in the same or similar forms. For example, US 2003/005751A discloses an engine lubrication system, comprising: an engine; an oil pan; a pump communicating with the engine and the oil pan; and a control module including logic means for receiving a signal representing an oil viscosity parameter value and logic means for determining oil viscosity at least partially based thereon; and further discloses a method for determining oil viscosity in an engine lubrication system, comprising the acts of: measuring an oil viscosity parameter value. In a preferred embodiment, the oil viscosity parameter value is a power consumption value of an oil pump.

WO 2013/173231A discloses a method for measuring viscosity of a fluid, the method comprising: receiving a flow of the fluid; directing the flow of the fluid through at least one porous medium column defining an inlet and an outlet such that a porous medium of predetermined permeability in the porous medium column resists the flow of the fluid and a pressure of the fluid at the outlet is less than a pressure of the fluid at the inlet; measuring a pressure differential between the pressure of the fluid at the inlet and the pressure of the fluid at the outlet; and determining the viscosity of the fluid according to the pressure differential and the permeability of the porous medium; and also discloses an apparatus for measuring viscosity of a fluid, the apparatus comprising: an inlet line configured to receive a flow of the fluid; at least one porous medium column defining an inlet and an outlet and configured to (a) direct the flow of the fluid from the inlet to the outlet such that the fluid flows through a porous medium of predetermined permeability in the porous medium column and (b) resist the flow of the fluid such that a pressure of the fluid at the outlet is less than a pressure of the fluid at the inlet; and a pressure sensor configured to measure a pressure differential between the pressure of the fluid at the inlet and the pressure of the fluid at the outlet, wherein the pressure sensor is adapted to determine the viscosity of the fluid according to the pressure differential and the permeability of the porous medium. WO 2013/173231A further teaches that the fluid can, for example, be delivered as an enhanced oil recovery (EOR) liquid with non-Newtonian viscosity, and the viscosity of the EOR liquid can be determined as the EOR liquid is injected through a well to a hydrocarbon reservoir. Such a method, if applied to urea solutions, would have the dual disadvantages of using expensive porous media and of being prone to blocking of the pores should the urea crystallise out from the urea solution during permeation through the porous media.

## Summary of the invention

It is an object of the present invention to provide a vehicular liquid storage system with the capability of determining a viscosity-related quality characteristic of the liquid and a method for assessing a quality of the liquid in a vehicular liquid storage system.

It is an advantage of the vehicular liquid storage system of the present invention that in the case of aqueous solutions of urea, the viscosity-related quality characteristic of aqueous urea solutions enables the concentration of urea to be determined with an appropriate accuracy. Moreover, such measurements are independent of the efficiency of the pump, which inevitably changes with time due to pump wear.

It is a further advantage of the vehicular liquid storage system of the present invention that in the case of urea solutions, the viscosity-related quality characteristic of aqueous urea solutions enables contamination with petrol or diesel fuel to be detected, thereby being capable of detecting tampering.

It is a still further advantage of the vehicular liquid storage system of the present invention of improving the concentration detection sensor with resulting cost savings and increased robustness.

The vehicular liquid storage system, according to the present invention, utilises the measurable pressure and flow across a tube or serpentine path medium, or the pressure drop across a tube and orifice to determine the flow, to determine viscosity. Moreover, a particular application of this technology is to determine the viscosity of aqueous urea solutions, which with correction for temperature enables the urea concentration to be determined and contamination of the urea solution with petrol and diesel fuel to be detected. The vehicular liquid storage system comprises a storage tank (101), e.g. a storage tank for aqueous urea solutions; and a pump (103), e.g. a pump capable of pumping aqueous urea solutions; an accumulator; an outlet (105) and at least one pressure sensor (104, 108, 117) and optionally an orifice (109), a calibrated flow restriction, a non-return valve (106), a pump isolation valve (114) and an accumulator (115). The calibrated flow restriction can be a separate device (107) or the path through the pump. If the calibrated flow restriction is a separate device (107) it can have any form e.g. be a straight tube with, for example, a square, rectangular or circular cross-section or be a serpentine. In the case of a straight tube the flow could be laminar. In addition a temperature sensor can be incorporated to provide the viscosity of the liquid as a function of temperature.

A first aspect of the present invention is realised by a vehicular liquid storage system (100) as claimed in claim 1. A second aspect of the present invention is realised by a motor vehicle comprised the above-mentioned vehicular liquid storage system.

A third aspect of the present invention is realised by a method for assessing a quality of a liquid in a vehicular liquid storage system as claimed in claim 6. Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1    is a hydraulic schematic of a vehicular liquid storage system, according to the present invention utilising the pressure drop across a tube and orifice to determine flow and thus determine the viscosity.

Fig. 2    shows a graph of percent pressure drop across a tube as a function of urea concentration in % by weight for pressures of 1.9 bar (upper line) and 2.1 bar (lower line).

Fig. 3    is a hydraulic schematic of a vehicular liquid storage system, according to the present invention utilising the known pressure across a tube or serpentine path medium to determine the viscosity.

Fig. 4    is a hydraulic schematic of a vehicular liquid storage system, according to the present invention utilising the known pressure across a tube or serpentine path medium to determine the viscosity, with the path through the pump constituting the calibrated flow restriction instead of the separate restriction device (107).

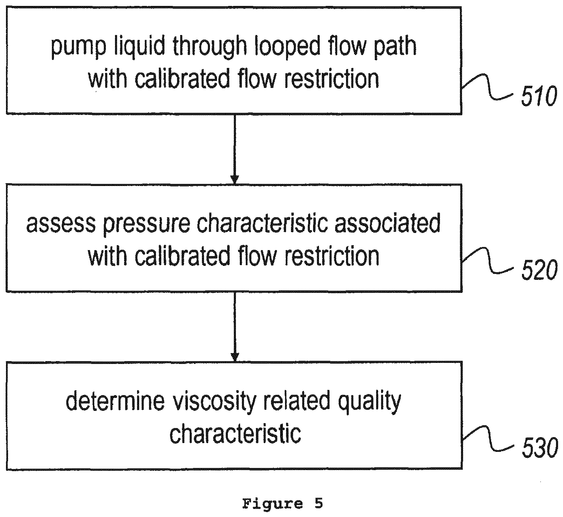

Fig. 5    shows the method steps in assessing a quality of a liquid in a vehicular storage system.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

Dependence of viscosity upon concentration

The viscosity of solutions are dependent upon the concentration of solute and also upon temperature. K. Kawahara et al., J. Biol. Chem 241, 3008 (1966), for example, established that the viscosity of aqueous solutions of urea at 25°C depended upon concentration according to the relationship:

$$\eta/\eta_0 = 1 + 3.75 \times 10^{-2} \, C + 3.15 \times 10^{-3} \, C^2 + 3.10 \times 10^{-4} \, C^3$$

where $\eta$ is the viscosity of the urea solution; $\eta_0$ is the viscosity of water and C is the molar concentration of urea. M.A. Motin et al., Phys. Chem. Liq. 40(5), 593 (2002) provides data on the dependence of the viscosity of aqueous solutions upon urea concentration and temperature, see Table 1 below:

Table 1:

| concentration | | Viscosity at 35°C [mPa. s] | Viscosity at 40°C [mPa.s] | Viscosity at 45°C [mPa.s] | Viscosity at 50°C [mPa.s] | Viscosity at 55°C [mPa.s] |
|---|---|---|---|---|---|---|
| [M] | [% by wt] | | | | | |
| 1.000 | 5.7 | 0.7612 | 0.6912 | 0.6293 | 0.5841 | 0.5318 |
| 2.0008 | 10.7 | 0.7944 | 0.7169 | 0.6557 | 0.6023 | 0.5616 |
| 3.0000 | 15.3 | 0.8302 | 0.7568 | 0.6939 | 0.6485 | 0.5884 |
| 4.0007 | 19.4 | 0.8754 | 0.7895 | 0.7263 | 0.6694 | 0.6128 |
| 5.0000 | 23.1 | 0.9160 | 0.8365 | 0.7712 | 0.7012 | 0.6472 |
| 5.9999 | 26.5 | 0.9544 | 0.8702 | 0.7978 | 0.7261 | 0.6803 |
| 7.0002 | 29.6 | 1.0204 | 0.9140 | 0.8423 | 0.7788 | 0.7100 |
| 8.0004 | 32.5 | 1.0488 | 0.9479 | 0.8735 | 0.8036 | 0.7390 |
| 8.9999 | 35.1 | 1.0773 | 0.9819 | 0.9047 | 0.8273 | 0.7679 |

Vehicular liquid storage system

According to a preferred embodiment of the first aspect of the present invention, the pump is arranged for pumping said liquid at a controlled flow rate or at a controlled pressure.

According to another preferred embodiment of the first aspect of the present invention,the flow path further comprises an orifice (109), wherein said calibrated flow restriction is a separate calibrated flow restriction device comprising a section of fixed length and diameter (107) optimized to amplify the pressure drop across said flow path as a function of the viscosity of said liquid (102), and wherein said means for assessing said pressure characteristic comprise a first pressure sensor (104) at the outlet of said pump, and a second pressure sensor (108) between said orifice (109) and said separate calibrated flow restriction device (107).

According to another preferred embodiment of the first aspect of the present invention, the system further comprising a pump isolation valve (114) and an accumulator (115) arranged downstream of said pump isolation valve (114), wherein said calibrated flow restriction is a separate calibrated flow restriction device (107) arranged downstream of said accumulator (115), wherein said means for assessing said pressure characteristic comprise a pressure sensor (117) arranged between said isolation valve (114) and said separate calibrated flow restriction device (107); the system further comprising a controller configured to operate said pump (103) and said pump isolation valve (114) in such a way as to induce a charging phase in which said pump isolation valve (114) allows liquid (102) from said pump (103) to charge said accumulator (115), and a discharging phase in which said pump isolation valve (114) prevents fluid communication between said pump (103) and said accumulator (115), thus forcing liquid (102) discharged from said accumulator (115) to pass through said separate calibrated flow restriction device (107).

According to another preferred embodiment of the first aspect of the present invention, the system further comprising a temperature sensor operationally connected to said processing means, said processing means being configured to determine said viscosity-related characteristic of said liquid (102) further as a function of said temperature.

According to another preferred embodiment of the first aspect of the present invention, the liquid storage tank (101) being adapted to store an aqueous urea solution, and wherein said viscosity-related characteristic is a urea concentration of said aqueous urea solution.

Figure 1 is a hydraulic schematic of a vehicular liquid storage system, according to the present invention utilising the pressure drop across a tube and orifice to determine flow and thus determine the viscosity, consisting of a reservoir (101) suitable for storing a volume of aqueous urea solution (102), typically 32.5% by weight (i.e. 8.02moles/kg water), and a pump (103) which provides a pressure and flow to the outlet port (105) and the fluid recirculation path (106, 107, 109). Additionally the system includes a pressure transducer (104) which is used by a microcontroller to control the pressure provided by the pump (103) to the outlet port (105) and the recirculation path (106, 107, 109) which includes a non-return valve (106) and restriction orifice (109). The non-return valve (106) is a standard component used within the system to prevent the aqueous urea solution from entering the hydraulic path after purge for freeze robustness. The orifice (109) is also standard within the system to aid pressure stability. Specifically for this invention the recirculation path (106, 107, 109) includes a fixed small diameter tube of a predetermined length between the non-return valve (106) and the orifice (109) with a pressure transducer (108) to measure the pressure between the tube (107) and orifice (109).

The configuration of the non-return valve (106) tube (107) and orifice (109) with respect to the inlet and outlet of the fluid circuit is not compulsory as long as the pressure transducer (108) is between the orifice (109) and the tube (107) where either the tube (107) or the orifice (109) are connected to the pump (103) outlet and the other is returning fluid (102) to the reservoir (101).

The hydraulic schematic of a vehicular liquid storage system depicted in Figure 1 operates by the fluid (102) being pressurized by the pump (103) which is controlled by a micro controller with pressure transducer (104) feedback to maintain a specified pressure throughout a range of fluid (102) flow. The fluid (102) then passes through the non-return valve (106) and enters a fixed small diameter tube of defined length (107) after which the fluid (102) flows through a fixed diameter orifice (109) that restricts the flow based on the pressure (108). According to one embodiment of the present invention, the difference in pressure (104 - 108) measured across the tube (107) as compared to the pump outlet pressure (104) is related directly to the fluid (102) viscosity. This pressure change per viscosity can be correlated directly to the aqueous urea concentration together with temperature compensation assuming that flow through the tube is laminar. One example of this correlation is shown in Figure 2 which is based on empirical data.

Figure 3 is a hydraulic schematic of a vehicular liquid storage system, according to the present invention utilising the known pressure across a tube or treacherous path medium to determine the viscosity, consisting of a reservoir (101) suitable for storing a volume of aqueous urea solution (102), typically 32.5% by weight (i.e. 8.02moles/kg water), a pump (103) which provides a means to charge an accumulator (105) when an electronic isolation valve (114) is actuated. Additionally the system includes a pressure transducer (117) which is used by a microcontroller to determine the accumulator (115) fill status to sequence the pump (103) and isolation valve (114) as needed to insure a sufficient amount of fluid (102) flow and pressure is available at the system outlet port (105). Specifically for this embodiment there is a separate calibrated flow restriction device (107) located between the pressure side of the system and the reservoir (101) where the separate calibrated flow restriction device (107) is optimized to influence flow based on the pressure applied and viscosity of the fluid within the specified range.

The hydraulic schematic of a vehicular liquid storage system depicted in Figure 3 operates by the accumulator (115) being charged with aqueous urea solution (102) by the pump (103) when so instructed by the micro controller. The system includes a pressure transducer (117) feedback to the micro controller which enables accumulator (115) fill status monitoring and controls the pump (103) and isolator valve (114) accordingly. This invention utilizes the time while the pump (103) is off and the isolation valve (114) is closed to monitor the pressure (117) decrease due to flow through the separate calibrated flow restriction device (107). The pressure decrease is linked to the defined accumulator (115) characteristics, flow through the separate calibrated flow restriction device (107) and outlet flow (105). Specifically according to an embodiment of the present invention, if the outlet flow (105) is known the flow through the separate calibrated flow restriction device (107) at a given pressure (117) can be calculated based on the accumulator (115) characteristics. Furthermore, using the defined characteristics of the separate restriction device (107), while knowing the flow and pressure (117), the applied viscosity of the fluid may be calculated. When the calculated viscosity is taken in combination with fluid temperature the aqueous urea concentration can be determined.

Additionally as shown in figure 4 the separate calibrated flow restriction device (107) can be dispensed with, the path through the pump (103) then constituting the calibrated flow restriction. The flow could then be determined by cycling the isolation valve (114) while the pump (103) is off. Assuming that the characteristics of the pump (103) are known the return flow across the pump (103) correlates to viscosity and thence to the concentration.

Method for assessing a quality of a liquid in a vehicular storage system

According to a preferred embodiment of the third aspect of the present invention, the pumping is performed at a controlled flow rate or at a controlled pressure.

According to another preferred embodiment of the third aspect of the present invention, the flow path further comprises an orifice (109), wherein the calibrated flow restriction is a separate calibrated flow restriction device comprising a section of fixed length and diameter (107) optimized to amplify the pressure drop across said flow path as a function of the viscosity of said liquid (102), and wherein assessing said pressure characteristic comprises measuring a first pressure at the outlet of said pump, and a second pressure between said orifice (109) and said separate calibrated flow restriction device (107).

According to another preferred embodiment of the third aspect of the present invention, the system further comprises a pump isolation valve (114) arranged upstream of said calibrated flow restriction, and an accumulator (115) and a pressure sensor (117) arranged between said pump isolation valve (114) and said calibrated flow restriction which is a separate calibrated flow restriction device (107), and the method comprising operating said pump (103) and said pump isolation valve (114) in such a way as to induce a charging phase in which said pump isolation valve (114) allows liquid (102) from said pump (103) to charge said accumulator (115), and a discharging phase in which said pump isolation valve (114) prevents fluid communication between said pump (103) and said accumulator (115), thus forcing liquid (102) discharged from said accumulator (115) to pass through said separate calibrated flow restriction device (107), wherein assessing said pressure characteristic takes place during said discharging phase.

According to another preferred embodiment of the third aspect of the present invention, the method further comprises measuring a temperature of said liquid (102), wherein said determining of said viscosity-related characteristic of said liquid (102) is performed as a function of said temperature.

According to another preferred embodiment of the third aspect of the present invention, the liquid storage tank (101) is adapted to store an aqueous urea solution, and wherein said viscosity-related characteristic is a urea concentration of said aqueous urea solution.

**Claims**

**1.** A vehicular liquid storage system (100) comprising:

- a liquid storage tank (101),
- a pump (103) arranged for pumping liquid (102) from said liquid storage tank (101), through a flow path comprising a calibrated flow restriction,
- means for assessing a pressure characteristic and a flow characteristic pertaining to said calibrated flow restriction when said liquid (102) runs through said flow path, and processing means configured to determine a viscosity-related quality characteristic of said liquid (102) as a function of said pressure characteristic and said flow characteristic, wherein said flow path further comprises an orifice (109), wherein said calibrated flow restriction is a separate calibrated flow restriction device,

said system being **characterized in that**:

- said calibrated flow restriction comprises a section of fixed length and diameter (107) optimized to amplify the pressure drop across said flow path as a function of the viscosity of said liquid (102), and that
- said means for assessing said pressure characteristic comprise a first pressure sensor (104) at the outlet of said pump, and a second pressure sensor (108) between said orifice (109) and said separate calibrated flow restriction device (107).

**2.** The system according to claim 1, wherein said pump is arranged for pumping said liquid at a controlled flow rate or at a controlled pressure.

**3.** The system according to any one of the preceding claims, said system further comprising a temperature sensor operationally connected to said processing means, said processing means being configured to determine said viscosity-related quality characteristic of said liquid (102) further as a function of said temperature.

4. The system according to any one of the preceding claims, wherein said liquid storage tank (101) is adapted to store an aqueous urea solution, and wherein said viscosity-related quality characteristic is a urea concentration of said aqueous urea solution.

5. A motor vehicle comprising the system according to any one of the preceding claims.

6. A method for assessing a quality of a liquid in a vehicular liquid storage system, the method comprising:

- pumping (510) liquid (102) from a liquid storage tank (101), through a flow path comprising a calibrated flow restriction (107),
- assessing (520) a pressure characteristic and a flow characteristic pertaining to said calibrated flow restriction (107) when said liquid (102) runs through said flow path, and
- determining (530) a viscosity-related quality characteristic of said liquid (102) as a function of said pressure characteristic and said flow characteristic,
- wherein said flow path further comprises an orifice (109),
- wherein said calibrated flow restriction is a separate calibrated flow restriction device,

said method being **characterized in that**:

- said calibrated flow restriction comprises a section of fixed length and diameter (107) optimized to amplify the pressure drop across said flow path as a function of the viscosity of said liquid (102), and that
- said assessing said pressure characteristic comprises measuring a first pressure at the outlet of said pump, and a second pressure between said orifice (109) and said separate calibrated flow restriction device (107).

7. The method according to claim 6, wherein said pumping is performed at a controlled flow rate or at a controlled pressure.

8. The method according to any one of claims 6-7, said method further comprising measuring a temperature of said liquid (102), wherein said determining of said viscosity-related characteristic of said liquid (102) is performed as a function of said temperature.

9. The method according to any one of claims 6-8, wherein said liquid storage tank (101) is adapted to store an aqueous urea solution, and wherein said viscosity-related characteristic is a urea concentration of said aqueous urea solution.

**Patentansprüche**

1. Fahrzeugflüssigkeitsspeichersystem (100), aufweisend:

- einen Flüssigkeitsspeichertank (101),
- eine Pumpe (103), dazu geeignet Flüssigkeit (102) aus dem Flüssigkeitsspeicherbehälter (101) durch einen Strömungsweg, welcher eine kalibrierte Durchflussbegrenzung aufweist, zu pumpen,
- Mittel zum Beurteilen einer Druckcharakteristik und einer Strömungscharakteristik in Bezug auf die kalibrierte Durchflussbegrenzung, wenn die Flüssigkeit (102) durch den Strömungsweg läuft, und Verarbeitungseinrichtung, welche dazu eingerichtet ist, eine viskositätsbezogene Qualitätscharakteristik der Flüssigkeit (102) als eine Funktion der Druckcharakteristik und der Strömungscharakteristik zu bestimmen, wobei der Strömungsweg ferner eine Öffnung (109) aufweist, wobei die kalibrierte Durchflussbegrenzung eine separate kalibrierte Durchflussbegrenzungsvorrichtung ist,

das System ist **dadurch gekennzeichnet, dass**:

- die kalibrierte Durchflussbegrenzung einen Abschnitt mit fester Länge und Durchmesser (107) aufweist, welcher optimiert ist, den Druckabfall über den Strömungsweg als eine Funktion der Viskosität der Flüssigkeit (102) zu verstärken, und dass
- die Mittel zum Beurteilen der Druckcharakteristik einen ersten Drucksensor (104) am Ausgang der Pumpe und einen zweiten Drucksensor (108) zwischen der Öffnung (109) und der separaten kalibrierten Durchflussbegrenzungsvorrichtung (107) aufweisen.

**2.** System gemäß Anspruch 1, wobei die Pumpe dazu geeignet ist, die Flüssigkeit mit einer kontrollierten Durchflussrate oder mit einem kontrollierten Druck zu pumpen.

**3.** System gemäß einem der vorhergehenden Ansprüche, wobei das System ferner einen Temperatursensor aufweist, welcher funktional mit der Verarbeitungseinrichtung verbunden ist, wobei die Verarbeitungseinrichtung dazu eingerichtet ist, die viskositätsbezogene Qualitätscharakteristik der Flüssigkeit (102) ferner als eine Funktion der Temperatur zu bestimmen.

**4.** System gemäß einem der vorhergehenden Ansprüche, wobei der Flüssigkeitsspeichertank (101) dazu ausgelegt ist, eine wässrige Harnstofflösung zu speichern, und wobei die viskositätsbezogene Qualitätscharakteristik eine Harnstoffkonzentration der wässrigen Harnstofflösung ist.

**5.** Kraftfahrzeug, welches das System gemäß einem der vorhergehenden Ansprüche aufweist.

**6.** Verfahren zum Beurteilen einer Qualität einer Flüssigkeit in einem Fahrzeugflüssigkeitsspeichersystem, wobei das Verfahren aufweist:

- Pumpen (510) von Flüssigkeit (102) aus einem Flüssigkeitsspeichertank (101) durch einen Strömungsweg, welcher eine kalibrierte Durchflussbegrenzung (107) aufweist,
- Beurteilen (520) einer Druckcharakteristik und einer Strömungscharakteristik in Bezug auf die kalibrierte Durchflussbegrenzung (107), wenn die Flüssigkeit (102) durch den Strömungsweg läuft, und
- Bestimmen (530) einer viskositätsbezogenen Qualitätscharakteristik der Flüssigkeit (102) als eine Funktion der Druckcharakteristik und der Strömungscharakteristik,
- wobei der Strömungsweg ferner eine Öffnung (109) aufweist,
- wobei die kalibrierte Durchflussbegrenzung eine separate kalibrierte Durchflussbegrenzungsvorrichtung ist,

das Verfahren ist **dadurch gekennzeichnet, dass**:

- die kalibrierte Durchflussbegrenzung einen Abschnitt mit fester Länge und Durchmesser (107) aufweist, welcher optimiert ist, den Druckabfall über den Strömungsweg als eine Funktion der Viskosität der Flüssigkeit (102) zu verstärken, und dass
- das Beurteilen der Druckcharakteristik das Messen eines ersten Drucks am Ausgang der Pumpe und eines zweiten Drucks zwischen der Öffnung (109) und der separat kalibrierten Durchflussbegrenzungsvorrichtung (107) aufweist.

**7.** Verfahren gemäß Anspruch 6, wobei das Pumpen mit einer kontrollierten Durchflussrate oder mit einem kontrollierten Druck durchgeführt wird.

**8.** Verfahren gemäß einem der Ansprüche 6 bis 7, wobei das Verfahren ferner das Messen einer Temperatur der Flüssigkeit (102) aufweist, wobei das Bestimmen der viskositätsbezogenen Charakteristik der Flüssigkeit (102) als eine Funktion der Temperatur durchgeführt wird.

**9.** Verfahren gemäß einem der Ansprüche 6 bis 8, wobei der Flüssigkeitsspeichertank (101) dafür ausgelegt ist, eine wässrige Harnstofflösung zu speichern, und wobei die viskositätsbezogene Charakteristik eine Harnstoffkonzentration der wässrigen Harnstofflösung ist.

**Revendications**

**1.** Système de stockage de liquide pour véhicule (100), comprenant :

- un réservoir de stockage de liquide (101),
- une pompe (103) agencée de manière à pomper du liquide (102) à partir dudit réservoir de stockage de liquide (101), à travers un chemin d'écoulement présentant une restriction d'écoulement calibrée,
- des moyens pour évaluer une caractéristique de pression et une caractéristique d'écoulement relatives à ladite restriction d'écoulement calibrée lorsque ledit liquide (102) s'écoule à travers ledit chemin d'écoulement, et

- des moyens de traitement configurés de manière à déterminer une caractéristique de qualité reliée à la viscosité dudit liquide (102) en fonction de ladite caractéristique de pression et de ladite caractéristique d'écoulement,

dans lequel ledit chemin d'écoulement comporte en outre un orifice (109),
dans lequel ladite restriction d'écoulement calibrée est un dispositif de restriction d'écoulement calibrée séparé, ledit système étant **caractérisé en ce que**:

- ladite restriction d'écoulement calibrée comprend une section de longueur et de diamètre fixes (107) optimisée de manière à amplifier la chute de pression à travers ledit chemin d'écoulement en fonction de la viscosité dudit liquide (102), et
- lesdits moyens pour évaluer ladite caractéristique de pression comprennent un premier capteur de pression (104) à la sortie de ladite pompe, et un second capteur de pression (108) entre ledit orifice (109) et ledit dispositif de restriction d'écoulement calibrée séparé (107).

2. Système selon la revendication 1, dans lequel ladite pompe est agencée de manière à pomper ledit liquide à un débit commandé ou à une pression commandée.

3. Système selon l'une quelconque des revendications précédentes, ledit système comprenant en outre un capteur de température connecté de façon opérationnelle auxdits moyens de traitement, lesdits moyens de traitement étant configurés de manière à déterminer ladite caractéristique de qualité reliée à la viscosité dudit liquide (102) en outre en fonction de ladite température.

4. Système selon l'une quelconque des revendications précédentes, dans lequel ledit réservoir de stockage de liquide (101) est adapté pour stocker une solution aqueuse d'urée, et dans lequel ladite caractéristique de qualité reliée à la viscosité est une concentration d'urée de ladite solution aqueuse d'urée.

5. Véhicule à moteur comprenant le système selon l'une quelconque des revendications précédentes.

6. Procédé pour évaluer une qualité d'un liquide dans un système de stockage de liquide pour véhicule, le procédé comprenant les étapes suivantes :

- pomper (510) du liquide (102) à partir d'un réservoir de stockage de liquide (101), à travers un chemin d'écoulement présentant une restriction d'écoulement calibrée (107),
- évaluer (520) une caractéristique de pression et une caractéristique d'écoulement relatives à ladite restriction d'écoulement calibrée (107) lorsque ledit liquide (102) s'écoule à travers ledit chemin d'écoulement, et
- déterminer (530) une caractéristique de qualité reliée à la viscosité dudit liquide (102) en fonction de ladite caractéristique de pression et de ladite caractéristique d'écoulement,
- dans lequel ledit chemin d'écoulement comporte en outre un orifice (109),
- dans lequel ladite restriction d'écoulement calibrée est un dispositif de restriction d'écoulement calibrée séparé,

ledit procédé étant **caractérisé en ce que**:

- ladite restriction d'écoulement calibrée comprend une section de longueur et de diamètre fixes (107) optimisée de manière à amplifier la chute de pression à travers ledit chemin d'écoulement en fonction de la viscosité dudit liquide (102), et **en ce que**
- ladite évaluation de ladite caractéristique de pression comprend la mesure d'une première pression à la sortie de ladite pompe, et d'une seconde pression entre ledit orifice (109) et ledit dispositif de restriction d'écoulement calibrée séparé (107).

7. Procédé selon la revendication 6, dans lequel ledit pompage est exécuté à un débit commandé ou à une pression commandée.

8. Procédé selon l'une quelconque des revendications 6 à 7, dans lequel ledit procédé comprend en outre une mesure d'une température dudit liquide (102), dans lequel ladite détermination de ladite caractéristique reliée à la viscosité dudit liquide (102) est exécutée en fonction de ladite température.

9. Procédé selon l'une quelconque des revendications 6 à 8, dans lequel ledit réservoir de stockage de liquide (101) est adapté pour stocker une solution aqueuse d'urée, et dans lequel ladite caractéristique reliée à la viscosité est une concentration d'urée de ladite solution aqueuse d'urée.

FIGURE 1

Figure 2

Figure 3

Figure 4

pump liquid through looped flow path
with calibrated flow restriction ⟋ 510

assess pressure characteristic associated
with calibrated flow restriction ⟋ 520

determine viscosity related quality
characteristic ⟋ 530

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014118248 A1
- US 20090101656 A
- WO 2007122154 A
- US 20080280371 A
- US 2003005751 A
- WO 2013173231 A

**Non-patent literature cited in the description**

- **K. KAWAHARA et al.** *J. Biol. Chem,* 1966, vol. 241, 3008
- **M.A. MOTIN et al.** *Phys. Chem. Liq.,* 2002, vol. 40 (5), 593